# EUROPEAN PATENT APPLICATION

(11) **EP 4 819 286 A1**
(43) Date of publication of application: **07.10.2026**
(21) Application number: 24899250.5
(22) Date of filing: 12.07.2024
(51) Int. Cl.: H01M 10/058, H01M 4/133

(54) **SECONDARY BATTERY AND ELECTRIC APPARATUS**

(30) Priority: 07.12.2023 CN 202311676650
(71) Applicant: Contemporary Amperex Technology Co., Limited, Ningde, Fujian 352100 (CN)
(72) Inventor: MA, Jianjun, Ningde, Fujian 352100 (CN); HE, Libing, Ningde, Fujian 352100 (CN)
(74) Representative: Gong, Jinping
(86) International application number: PCT/CN2024/105135
(87) International publication number: WO 2025/118599

(57) **Abstract**

Provided in the present disclosure are a secondary battery and an electric apparatus. The secondary battery includes a negative electrode sheet, where the negative electrode sheet includes a negative electrode current collector and a negative electrode film layer arranged on at least one surface of the negative electrode current collector, the negative electrode film layer includes a negative electrode active material, a compaction density of the negative electrode film layer is greater than or equal to 1.45 g/cm³, a liquid absorption rate of the negative electrode active material is 30 ml/100 g to 60 ml/100 g, and a tortuosity of the negative electrode sheet is less than or equal to 6. The secondary battery in the present disclosure has a relatively high energy density while having excellent cycle performance.

## Description

### CROSS REFERENCE

The present disclosure makes reference to Chinese Patent Application No. 202311676650.3 filed on December 07, 2023 and entitled "Secondary Battery and Electric Apparatus", which is incorporated herein by reference in its entirety.

### TECHNICAL FIELD

The present disclosure relates to the technical field of secondary batteries, and in particular, to a secondary battery and an electric apparatus.

### BACKGROUND

With the proposal of carbon neutrality goals and policies, the market of secondary batteries for energy storage has experienced a significant boom, and for energy storage batteries, energy density and cycle life are important indicators, especially for energy storage batteries applied to large energy storage power stations. However, in some cases, the problems faced are as follows: it is often difficult to improve the cycle performance of the battery when the energy density of the energy storage battery is improved, and the energy density of the battery is often affected when the cycle performance of the secondary battery is improved.

### SUMMARY

The present disclosure is made in view of the foregoing topics, and an objective of the present disclosure is to provide a secondary battery and an electric apparatus. The secondary battery has a relatively high energy density while having excellent cycle performance.

A first aspect of the present disclosure provides a secondary battery, including a negative electrode sheet, where the negative electrode sheet includes a negative electrode current collector and a negative electrode film layer arranged on at least one surface of the negative electrode current collector, the negative electrode film layer includes a negative electrode active material, a compaction density of the negative electrode film layer is greater than or equal to 1.45 g/cm³, a liquid absorption rate of the negative electrode active material is 30ml/100g to 60ml/100g, and a tortuosity of the negative electrode plate is less than or equal to 6.

Under the premise of a high compaction density, the liquid absorption rate of the negative electrode active material and the tortuosity of the negative electrode plate are controlled within an appropriate range, such that an electrolyte can fully infiltrate the negative electrode sheet during repeated lithium deintercalation and deintercalation of the negative electrode, the possibility of local polarization is reduced, the current of the negative electrode sheet during cycling is uniformly distributed, the possibility of side reactions at a negative electrode interface during cycling is reduced, and the influence of the side reactions on the cycle performance and storage performance of the battery due to the phenomenon that by-products block the pores is reduced.

The negative electrode sheet of the secondary battery of the present disclosure has a high compaction density, and the electrolyte can fully infiltrate the negative electrode sheet during cycling, such that the cycle performance and storage performance of the battery can be further improved on the premise that the battery has a high energy density.

In any implementation, the compaction density of the negative electrode film layer is 1.5 g/m³ to 1.6 g/m³.

The compaction density of the negative electrode film layer is within an appropriate range, which can take into account both the high capacity and the excellent infiltration performance of the electrolyte to the electrode sheet, thereby facilitating the secondary battery to have both the high energy density and the excellent cycle performance and storage performance.

In any implementation, the liquid absorption rate of the negative electrode active material is 35 ml/100 g to 50 ml/100 g.

The negative electrode active material is in an appropriate range, and under the premise that the electrolyte sufficiently infiltrates into the negative electrode sheet, the influence of side reactions caused by the excessive surface activity of the negative electrode active material on the cycle performance and storage performance is reduced, the cycle performance and storage performance of the battery are further improved, and the service life and storage life of the battery are prolonged.

In any implementation, a tortuosity of the negative electrode sheet is 2 to 5.

The tortuosity of the negative electrode sheet within an appropriate range can take into account both the high capacity and the excellent infiltration performance of the electrolyte to the electrode sheet, thereby facilitating the secondary battery to have both the high energy density and the excellent cycle performance and storage performance.

In any implementation, the negative electrode active material includes primary particles and secondary particles, and based on a total number of the primary particles and the secondary particles in the negative electrode active material, and a proportion by number of the secondary particles is 25% to 75%. In some examples, based on the total amount of the primary particles and the secondary particles in the negative electrode active material, the proportion by number of the secondary particles is 26% to 50%.

There are pores inside the secondary particles, and the pores have a certain liquid retention capacity, which can lock the electrolyte penetrating into the electrode sheet during cycling, thereby being beneficial to improve the liquid absorption rate of the negative electrode active material, and beneficial to the electrolyte fully infiltrating the negative electrode sheet, and at the same time, the primary particles and the secondary particles can form pores in the negative electrode film layer, which can improve the permeability of the electrolyte during cycling and improve the cycle performance of the battery.

In any implementation, a particle body of the negative electrode active material includes an inner region and a surface layer region at least partially surrounding the inner region, the surface layer region means a region formed by extending a distance of 30 nm from a surface of the particle body of the negative electrode active material to an interior of the particles, and the surface layer region includes a disordered layer, and in some exemplary examples, a thickness of the disordered layer is 1 nm to 20 nm.

The disordered layer structure in the surface region of the negative electrode active material has abundant void structures and a specific liquid retention capacity, such that the liquid absorption rate of the negative electrode active material can be increased, an infiltration capacity of an electrolyte solution to the negative electrode sheet can be improved, and cycle performance and storage performance of the battery can be improved.

In any implementation, a specific surface area of the negative electrode active material is 1.1 m²/g to 1.9 m²/g. In some examples, the specific surface area of the negative electrode active material is 1.2 m²/g to 1.8 m²/g.

The specific surface area of the negative electrode active material satisfies the range, such that the liquid absorption rate of the material is within an appropriate range, making the electrolyte solution fully infiltrate the negative electrode sheet during repeated lithium deintercalation and deintercalation of the negative electrode, the possibility of local polarization of the negative electrode sheet is reduced, and the cycle performance of the battery is improved.

In any implementation, a particle size distribution (Dv90 to Dv10)/Dv50 of the negative electrode active material is 1.1 to 1.6. In some examples, the particle size distribution (Dv90 to Dv10)/Dv50 of the negative electrode active material is 1.15 to 1.55.

When the particle size distribution of the negative electrode active material satisfies the range, the tortuosity of the negative electrode sheet is small, such that the electrolyte solution can fully infiltrate the negative electrode sheet, and the cycle performance and storage performance of the battery are improved. Meanwhile, the small particle size distribution is helpful to improve the concentration degree of the particle size of the negative electrode active material, reduce the uneven distribution of active ions in the negative electrode active material caused by a large difference in particle size, reduce the side reactions between the negative electrode active material with a smaller particle size and the electrolyte solution, and improve the cycle performance and storage performance of the secondary battery.

In any implementation, a gram capacity of the negative electrode active material is 345 mAh/g to 355 mAh/g. In some examples, the gram capacity of the negative electrode active material is 347 mAh/g to 353 mAh/g.

The gram capacity of the negative electrode active material is within an appropriate range, and the particle strength is high, which reduces the possibility that the particles tend to be flat during cold pressing of the electrode sheet, prevents a transmission path of the electrolyte solution from being significantly lengthened, is beneficial to reduce the tortuosity of the negative electrode sheet, facilitates the circulation of the electrolyte solution, and improves the cycle performance of the battery.

In any implementation, a volume-distributed particle size Dv50 of the negative electrode active material is denoted as A, and a volume-distributed particle size Dv50 of the negative electrode active material after cold pressing under a pressure of 20,000N is denoted as B, then the negative electrode active material satisfies: B/A≥85%. In some examples, the negative electrode active material satisfies: B/A≥90%.

The binding strength of the negative electrode active material particles satisfying the above range is high, which reduces the possibility that the particles tend to be flat during cold pressing of the electrode sheet, prevents the transmission path of the electrolyte from being significantly lengthened, is beneficial to reduce the tortuosity of the negative electrode sheet, facilitates the circulation of the electrolyte solution, and improves the cycle performance of the battery.

In any implementation, the volume-distributed particle size Dv50 of the negative electrode active material is 8.0 µm to 12.0 µm.

The volume-distributed particle size Dv50 of the negative electrode active material is within an appropriate range, which is beneficial to the formation of reasonable pore structures between the particles of the negative electrode film layer, and is beneficial to the infiltration of the electrolyte solution into the electrode sheet, thereby improving the cycle performance of the battery, and at the same time, can reduce the negative influence of the excessively large volume-distributed particle size Dv50 of the negative electrode active material on the dynamic performance of the battery, reduce the possibility of lithium precipitation, and improve the cycle performance and storage performance of the battery.

In any implementation, an areal density of the negative electrode film layer is 8 mg/cm² to 14 mg/cm². In some examples, the areal density of the negative electrode film layer is 9 mg/cm² to 12 mg/cm².

The areal density of the negative electrode film layer is within an appropriate range, and the thickness of the negative electrode sheet is appropriate, such that on the one hand, the path of the electrolyte laterally infiltrating the electrode sheet is relatively short, and the time required for the electrolyte solution to completely infiltrate the negative electrode sheet is also relatively short, thereby reducing the possibility of local polarization and improving the cycle performance and storage performance of the battery, and on the other hand, the areal density within the appropriate range also ensures that the battery has a certain energy density.

In any implementation, the cohesive force of the negative electrode sheet is 50 N/m to 200 N/m. In some examples, the cohesive force of the negative electrode sheet is 60 N/m to 150 N/m.

The negative electrode sheet has a high cohesive force, which can reduce the rebound of the electrode sheet, reduce the volume of the electrolyte solution to be supplied in the pores of the negative electrode sheet during cycling, reduce the time required for the electrolyte solution to completely infiltrate the electrode sheet, reduce the possibility of local polarization, improve the infiltration of the electrolyte solution into the electrode sheet, and improve the cycle performance and storage performance of the battery. At the same time, the high cohesive force also avoids the negative influence of powder falling and film peeling of the electrode sheet during cycling on the cycle performance and safety performance of the battery.

In any implementation, a rebound rate of the negative electrode sheet is 8% to 23%. In some examples, the rebound rate of the negative electrode sheet is 10% to 21%.

The rebound rate of the negative electrode sheet will affect the volume change rate of the pores in the negative electrode sheet during cycling, that is, the rebound rate of the negative electrode sheet will affect the volume of the electrolyte solution to be supplied in the pores of the negative electrode sheet during cycling. The rebound rate of the negative electrode sheet is within an appropriate range, and the volume of the electrolyte solution to be supplied in the pores of the negative electrode sheet is relatively small during cycling, such that the time required for the electrolyte solution to completely infiltrate the electrode sheet is relatively short, the possibility of local polarization is reduced, the cycle performance and storage performance of the battery are improved, and the rebound rate of the negative electrode sheet within the suitable range also ensures that the battery has a certain energy density.

A second aspect of the present disclosure provides an electric apparatus, including the secondary battery in the first aspect.

### BRIEF DESCRIPTION OF THE DRAWINGS

FIG. 1 is a schematic diagram of a cross-sectional image of a particle of a negative electrode active material of the present disclosure.
FIG. 2 is a schematic diagram of a secondary battery according to an implementation of the present disclosure.
FIG. 3 is an exploded view of the secondary battery according to an implementation of the present disclosure shown in FIG. 1.
FIG. 4 is a schematic diagram of a battery module according to an implementation of the present disclosure.
FIG. 5 is a schematic diagram of a battery pack according to an implementation of the present disclosure.
FIG. 6 is an exploded view of the battery pack according to an implementation of the present disclosure shown in FIG. 4.
FIG. 7 is a schematic diagram of an electrical apparatus using a secondary battery as a power supply according to an implementation of the present disclosure.

### Description of reference signs:

1, battery pack; 2, upper case; 3, lower case; 4, battery module; 5, secondary battery; 51, housing; 52, electrode assembly; 53, top cover assembly; 100, negative electrode active material; 101, surface layer region; 102, inner region.

### DETAILED DESCRIPTION OF PREFERRED EMBODIMENTS

Hereinafter, implementations specifically disclosing a secondary battery and an electric apparatus in the present disclosure are described in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. In addition, the accompanying drawings and the following descriptions are provided for those skilled in the art to fully understand the present disclosure, and are not intended to limit the subject matter described in the claims.

The "range" disclosed in the present disclosure is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present disclosure, unless otherwise stated, a numerical range "a to b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all implementations and optional implementations of the present disclosure may be combined with each other to form new technical solutions.

Unless otherwise specified, all technical features and optional technical features of the present disclosure can be combined with each other to form new technical solutions.

Unless otherwise specified, all steps in the present disclosure may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

Unless otherwise specified, the terms "including" and "containing" as used herein are meant to be open or closed. For example, the "including" and "containing" may mean that other components not listed may be further included or contained, or only the listed components may be included or contained.

In the present disclosure, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

In order to improve the energy density of the battery, the compaction density of the negative electrode film layer is generally increased. However, the tortuosity of the negative electrode sheet under high compaction density becomes greater, the transmission path of the electrolyte solution in the negative electrode film layer is significantly lengthened, the time required for the electrolyte solution to infiltrate the negative electrode sheet is lengthened, and a part of the electrode sheet region cannot absorb the discharged electrolyte solution in time, resulting in that the active ions cannot continue to be embedded into the negative electrode sheet, local polarization occurs, and the phenomenon of uneven current distribution occurs, such that black spots appear on the surface of the negative electrode sheet and other side reactions are accompanied, and by-products are accumulated to further block the pores, resulting in a decrease in the capacity retention rate of the battery and a decrease in the service life and storage life of the battery.

Therefore, it is currently difficult for secondary batteries to achieve both high energy density and excellent cycle performance and storage performance.

### [Negative electrode sheet]

The present disclosure provides a secondary battery, including a negative electrode sheet, where the negative electrode sheet includes a negative electrode current collector and a negative electrode film layer formed on at least one surface of the negative electrode current collector, the negative electrode film layer includes a negative electrode active material, a compaction density of the negative electrode film layer is greater than or equal to 1.45 gram/centimeter³ (g/cm³), a liquid absorption rate of the negative electrode active material is 30 milliliter (ml)/100 gram (g) to 60 ml/100 g, and a tortuosity of the negative electrode sheet is less than or equal to 6.

In some examples, the compaction density of the negative electrode film layer is 1.45 g/cm³, 1.55 g/cm³, 1.65 g/cm³, 1.75 g/cm³, 1.85 g/cm³, 1.95 g/cm³, or any value therebetween.

The compaction density of the negative electrode film layer may be tested using methods known in the art. As an example, an electronic balance is used to weigh a negative electrode sheet test sample with an area of S, the weight is denoted as W1, and the thickness T1 of the negative electrode sheet is measured using a ten thousand micrometer. Then, the electrode sheet film layer after weighing is wiped off, the weight of the negative electrode current collector is weighed and denoted as W2, and the thickness T2 of the negative electrode current collector is measured using a ten thousand micrometer. Then, the compaction density of the negative electrode film layer is PD=(W1-W2)/[(T1-T2)×S].

In some examples, the liquid absorption rate of the negative electrode active material is 30 ml/100 g, 35 ml/100 g, 40 ml/100 g, 45 ml/100 g, 50 ml/100 g, 55 ml/100 g, 60 ml/100 g, or any value therebetween.

Herein, the term "liquid absorption rate of the negative electrode active material" refers to the volume of the electrolyte solution that can be absorbed by 100 g of the negative electrode active material. For example, the liquid absorption rate of the negative electrode active material being 40 ml/100 g means that 100 g of the negative electrode active material can absorb 40 ml of the electrolyte solution.

The liquid absorption rate of the negative electrode active material is affected by the specific surface area of the material, the proportion by number of the secondary particles in the material, and the morphology of the material.

In the present disclosure, the liquid absorption rate of the negative electrode active material can be tested using a method known in the art, and as an example, the electrolyte solution for testing and a material sample are respectively obtained, and a torque threshold of a tester is set; the electrolyte solution is added into the sample in a mixing chamber of the tester at a constant speed, the viscosity of the mixture of the sample and the electrolyte increases continuously as the liquid absorption rate of the sample increases, and when the viscosity of the mixture reaches the preset torque threshold (for example, 1 Newton (N)) of the tester, the absorption rate of the electrolyte solution by the sample per unit mass is stopped and the volume of the electrolyte solution absorbed by the sample is calculated, and the value is the liquid absorption rate of the sample. A formula of the electrolyte solution is as follows: ethylene carbonate (DMC), diethyl carbonate (EMC), and ethyl methyl carbonate (EC) are mixed at a weight ratio of 4:3:3 to obtain an organic solvent, and then LiPF₆ is dissolved in the organic solvent to prepare an electrolyte solution with a concentration of 1.0 mol/L.

In some examples, the tortuosity of the negative electrode sheet is 1, 2, 3, 4, 5, 6, or any value therebetween.

In the present disclosure, the term "tortuosity of the negative electrode sheet" refers to a ratio of a transmission path length of the electrolyte solution passing through pores of the negative electrode film layer of the negative electrode sheet to a thickness of the negative electrode film layer, which determines a diffusion path of the electrolyte solution inside the negative electrode film layer.

The tortuosity of the negative electrode sheet will be affected by the compaction density of the negative electrode film layer, the particle size uniformity of the negative electrode active material, and the particle strength.

In the present disclosure, the tortuosity of the negative electrode sheet can be tested by a method known in the art, and as an example, (1) a symmetrical battery EIS test is performed, in which a negative electrode sheet with no scratch and no crease on the surface is selected and punched into a small wafer with a diameter of 14 millimeters (mm), the negative electrode sheet is assembled into a symmetrical battery in a glove box (humidity≤1 ppm) at room temperature, and the symmetrical battery is allowed to stand for 12 hours (h) or more after the electrolyte is injected, such that the electrolyte solution fully infiltrates the electrode sheet. The impedance change is detected by an EIS test, and the test flow includes an upper limit frequency of 1 kilohertz (kHZ), a lower limit frequency of 500 megahertz (mHZ), a disturbance voltage of 5 millivolts (mV), and a symmetrical cell voltage range of -1 volt (V) to 1 V; the test data is fitted to obtain the diffusion impedance Rion of the ions. A formula of the electrolyte solution is as follows: ethylene carbonate (DMC), diethyl carbonate (EMC), and ethyl methyl carbonate (EC) are mixed at a weight ratio of 4:3:3 to obtain an organic solvent, and then LiPF₆ was dissolved in the organic solvent to prepare an electrolyte solution with a concentration of 1.0 mol/L. (2) Calculation of the tortuosity of the electrode sheet: the area A (1.5386 centimeter² (cm²)) of the small round sheet, the thickness d (centimeter (cm)) of the small round sheet, the conductivity k of the electrolyte solution, the porosity ε of the electrode sheet, and the ion diffusion resistance Rion (ohm (Ω)) are substituted into the following formula to calculate the tortuosity of the electrode plate $τ = \frac{ε ∗ k ∗ Rion ∗ A}{d}$.

In the negative electrode sheet of the present disclosure, the compaction density of the negative electrode film layer is greater than or equal to 1.45 g/cm³, and the battery has a high energy density. However, the high compaction density will increase the tortuosity of the negative electrode sheet, and the transmission path of the electrolyte solution will be lengthened, which is not conducive to the circulation of the electrolyte solution, affects the infiltration performance of the electrolyte solution to the negative electrode sheet, and affects the cycle performance of the battery.

To compensate for the negative influence of high compaction density on infiltration, the present disclosure solves this problem from both aspects of shortening the infiltration time and shortening the infiltration path, respectively. On the one hand, the negative electrode active material with the liquid absorption rate of 30 ml/100 g to 60 ml/100 g is used, and the liquid absorption rate thereof will affect the diffusion ability of the electrolyte solution inside the electrode plate. If the liquid absorption rate of the negative electrode active material is too less, the infiltration performance of the electrolyte solution with the negative electrode active material is worse, and a longer time is required for the electrolyte solution to completely infiltrate the negative electrode active material particles and the pores of the negative electrode sheet, which cannot achieve the purpose of improving the infiltration performance of the electrode plate; if the liquid absorption rate of the negative electrode active material is too great, the surface activity of the negative electrode material is too high, causing the negative electrode material to consume more active lithium during cycling, which, on the contrary, is not conducive to prolonging the life of the battery. On the other hand, by regulating the particle size uniformity and particle strength of the negative electrode active material or the areal density of the negative electrode film layer, the tortuosity of the electrode sheet is controlled to be less than or equal to 6, to compensate for the negative influence of high compaction density on the tortuosity of the electrode sheet, such that the transmission path of the electrolyte solution in the negative electrode film layer is shortened, and the purpose of improving the infiltration performance of the electrolyte solution to the negative electrode sheet is achieved, thereby improving the cycle performance and storage performance of the battery.

In summary, the negative electrode sheet of the present disclosure has a high compaction density, and the electrolyte can fully infiltrate the negative electrode sheet during cycling, such that the cycle performance and storage performance of the battery can be improved on the premise that the battery has a high energy density.

In some implementations, the compaction density of the negative electrode film layer is 1.5 g/m³ to 1.6 g/m³.

In some examples, the compaction density of the negative electrode film layer is 1.5 g/m³, 1.52 g/m³, 1.54 g/m³, 1.55 g/m³, 1.56 g/m³, 1.58 g/m³, 1.6 g/m³, or any value therebetween.

The compaction density of the negative electrode film layer is within an appropriate range, which can take into account both the high capacity and the excellent infiltration performance of the electrolyte to the electrode sheet, thereby facilitating the secondary battery to have both the high energy density and the excellent cycle performance and storage performance.

In some implementations, the liquid absorption rate of the negative electrode active material is 35 ml/100 g to 50 ml/100 g. In some examples, the liquid absorption rate of the negative electrode active material is 35 ml/100 g, 40 ml/100 g, 45 ml/100 g, 50 ml/100 g, or any value therebetween.

The liquid absorption rate of the negative electrode active material is in an appropriate range, and under the premise that the electrolyte sufficiently infiltrates into the negative electrode sheet, the influence of side reactions caused by the excessive surface activity of the negative electrode active material on the cycle performance and storage performance is reduced, the cycle performance and storage performance of the battery are further improved, and the service life of the battery is prolonged.

In some implementations, a tortuosity of the negative electrode sheet is 2 to 5. In some examples, the tortuosity of the negative electrode sheet is 2, 3, 4, 5, or any value therebetween.

The tortuosity of the negative electrode sheet within an appropriate range can further shorten the transmission path of the electrolyte solution in the negative electrode sheet, improve the infiltration performance of the electrolyte solution to the negative electrode sheet, and improve the cycle performance and storage performance of the battery. At the same time, a situation that the energy density of the battery is affected by controlling the compaction density or the areal density of the negative electrode film layer within a relatively small range due to the excessively low tortuosity is avoided, or the particle size distribution of the negative electrode active material is controlled within a relatively small range is avoided, which results in an increase in the difficulty of material preparation and is not conducive to industrial production.

In summary, the tortuosity of the negative electrode sheet within the appropriate range can improve the cycle performance and storage performance of the battery, and can also enable the battery to have a high energy density and/or save the cost.

In some implementations, the negative electrode active material includes primary particles and secondary particles, and based on a total number of the primary particles and the secondary particles in the negative electrode active material, a proportion by number of the secondary particles is 25% to 75%. In some examples, the proportion by number of the secondary particles is 26% to 50%.

In some examples, based on the total amount of the primary particles and the secondary particles in the negative electrode active material, the proportion by number of the secondary particles is 25%, 30%, 35%, 40%, 45%, 50%, 55%, 60%, 65%, 70%, 75%, or any value therebetween.

Herein, "primary particles" generally refers to non-agglomerated particles. The "secondary particle" refers to an agglomerated particle formed by aggregating two or more primary particles. The agglomeration of the particles can be effected by an external pressure or can be assisted by additional substances, for example, viscous chemicals. The primary particles and the secondary particles may be distinguished using a scanning electron microscope (SEM) image.

In the present disclosure, the proportion by number of the secondary particles in the negative electrode active material may be tested according to the following method: a test sample is randomly selected from the negative electrode film layer, a plurality of test regions are randomly selected from the test sample, images of the plurality of test regions are acquired by a scanning electron microscope, the proportion of the number of the negative electrode active material particles having the secondary particle morphology in each image to the total number of the negative electrode active material particles is counted, and the average value of a plurality of statistical results is the proportion by number of the secondary particles in the negative electrode active material.

The negative electrode active material of the present disclosure includes both primary particles and secondary particles, which can take into consideration better cycle performance and kinetic performance. The negative electrode active material of the primary particles has a relatively stable structure, which can effectively improve the cycle performance of the battery, and the secondary particles have pores inside and have a certain liquid retention capacity, which can better absorb the electrolyte solution penetrating into the electrode sheet during cycling, improve the liquid absorption rate of the negative electrode active material, and facilitate the electrolyte solution to fully infiltrate the negative electrode sheet, thereby improving the dynamic performance of the battery.

In some implementations, a particle body of the negative electrode active material includes an inner region and a surface layer region at least partially surrounding the inner region, the surface layer region means a region formed by extending a distance of 30 nanometers (nm) from a surface of the particle body of the negative electrode active material to an interior of the particles, and the surface layer region includes a disordered layer.

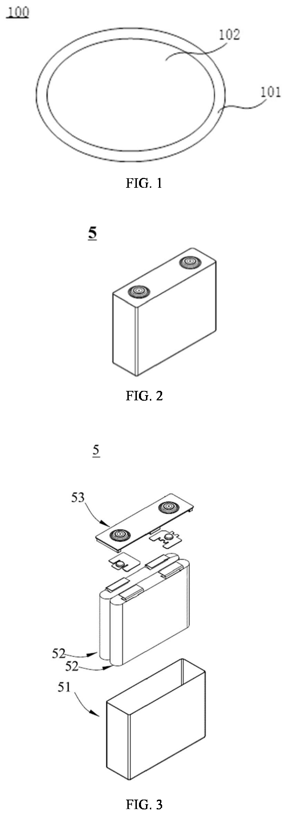

FIG. 1 is a schematic diagram of a cross-sectional image of a particle of a negative electrode active material 100 of the present disclosure. As shown in FIG. 1, the region formed by extending a distance of 30 nm from the surface of the particle body of the negative electrode active material 100 to the interior is a surface layer region 101, a region inside the surface layer region 101 is an inner region 102, and the surface layer region 101 includes a disordered layer.

The disordered layer may be obtained by a transmission electron microscope (TEM) test. A thin slice with a thickness of about 20 mm to 50 mm is cut out from the middle of the particle body of the negative electrode active material by a focused ion beam (FIB), and then the thin slice is subjected to a TEM test, it can be observed that the surface layer region includes a disordered layer in which lattice fringes exhibit long-range disorder and short-range order, and the electron diffraction pattern at the disordered layer exhibits a halo shape.

The disordered layer mainly includes amorphous carbon, and the disordered layer has abundant large pore structures and has a certain liquid retention capacity, which can improve the liquid absorption rate of the negative electrode active material and improve the infiltration ability of the electrolyte solution to the negative electrode sheet. In addition, unlike the disordered layer coated on the surface of the negative electrode active material in the prior art, the disordered layer of the negative electrode active material provided in the examples of the present disclosure is located in the particle body of the negative electrode active material, and is derived from the same raw material as the negative electrode active material, and is not prepared by post-treatment. Therefore, compared with the negative electrode active material with a disordered layer obtained by surface coating treatment, the negative electrode active material has better material consistency, such that the battery exhibits a longer cycle life, achieves both the battery dynamic performance and the cycle stability, and is particularly suitable for an energy storage battery with extremely high requirements on the cycle life.

In some implementations, a thickness of the disordered layer is 1 nm to 20 nm. In some implementations, the thickness of the disordered layer is 1 nm, 4 nm, 5 nm, 8 nm, 10 nm, 12 nm, 15 nm, 16 nm, 20 nm, or a value range between any two of them.

In the present disclosure, the thickness of the disordered layer may be tested by a method known in the art, and as an example, may be obtained by a transmission electron microscope (TEM) test. A thin slice with a thickness of about 20 mm to 50 mm is cut out from the middle of the particle body of the negative electrode active material by a focused ion beam (FIB), and then the thin slice is subjected to a TEM test to obtain a TEM test original picture, and the original picture format (xx. dm3) is stored. The original image obtained by the above TEM test is opened in Digital Micrograph software, and the disordered layer is identified by diffraction fringes or lattice spacing, and the thickness thereof is measured. In general, the disordered layer has no diffraction fringes and has a larger lattice spacing than that of the ordered layer, and the thickness thereof is measured.

For the disordered layer with the thickness within the above range, the liquid absorption rate of the negative electrode active material is within an appropriate range, which is not only beneficial to the electrolyte solution to fully infiltrate the negative electrode sheet and improve the cycle performance of the battery, but also does not cause an excessive degree of side reactions between the active material and the electrolyte solution to affect the cycle performance and storage performance.

In some implementations, a specific surface area of the negative electrode active material is 1.1 (meter²/gram) m²/g to 1.9 m²/g. In some examples, the specific surface area of the negative electrode active material is 1.1 m²/g, 1.2m²/g, 1.4 m²/ g, 1.6 m²/g, 1.8 m²/g, 1.9 m²/g, or any value therebetween.

In some implementations, the specific surface area of the negative electrode active material is 1.2 m²/g to 1.8 m²/g. In some examples, the specific surface area of the negative electrode active material is 1.2 m²/g, 1.4 m²/g, 1.6 m²/g, 1.8 m²/g, or any value therebetween.

The specific surface area of the negative electrode active material and may be measured using an instrument or a method known in the art. For example, with reference to GB/T 19587-2017, the specific surface area may be obtained by using a specific surface area testing method with nitrogen adsorption and using the BET (Brunauer Emmett Teller) method for calculation, wherein the specific surface area testing method with nitrogen adsorption may be performed by a Tri-Star 3020 Specific Surface Area Pore Size Analysis Tester from Micromeritics, USA.

The specific surface area of the negative electrode active material satisfies the range, such that the liquid absorption rate of the material is within an appropriate range, which is not only beneficial to the electrolyte solution to fully infiltrate the negative electrode sheet and improve the cycle performance of the battery, but also does not cause an excessive degree of side reactions between the active material and the electrolyte solution to affect the cycle performance and storage performance.

In some implementations, the particle size distribution (Dv90 to Dv 10)/Dv50 of the negative electrode active material is 1.1 to 1.6. In some examples, the particle size distribution (Dv90 to Dv10)/Dv50 of the negative electrode active material is 1.15 to 1.55. In some examples, the particle size distribution (Dv90 to Dv10)/Dv50 of the negative electrode active material is 1.1, 1.2, 1.3, 1.4, 1.5, 1.6, or any value therebetween.

The volume-distributed particle sizes Dv10, Dv50, and Dv90 of the negative electrode active material respectively present the particle sizes at which the cumulative volume distribution percentage of the material reaches 10%, 50%, and 90%, and may be measured using instruments and methods known in the art. For example, the volume-distributed particle size may be measured using a laser particle size analyzer with reference to a laser diffraction method for particle size distribution

GB/T 19077-2016. The testing instrument may be a Mastersizer Model 3000 laser particle size analyzer from Malvern Instruments Ltd., UK.

The particle size distribution of the negative electrode active material satisfying the range is beneficial to improve the concentration degree of the particle size of the negative electrode active material, improve the arrangement concentration degree of the particles, and reduce the tortuosity of the negative electrode sheet, such that the electrolyte solution can fully infiltrate the negative electrode sheet, and the cycle performance and storage performance of the battery are improved, and the uneven distribution of the active ions in the negative electrode active material caused by a large difference in particle size can also be reduced, thereby reducing the side reactions between the negative electrode active material with a smaller particle size and the electrolyte solution, and improving the cycle performance and storage performance of the secondary battery. Meanwhile, the particle size distribution of the negative electrode active material is within the above range, and the particle packing performance is good, which is beneficial to improve the compaction density of the negative electrode film layer, thereby further improving the energy density of the secondary battery.

In some implementations, the gram capacity of the negative electrode active material is 345 mAh/g to 355 mAh/g. In some examples, the gram capacity of the negative electrode active material is 347 mAh/g to 353 mAh/g. In some examples, the gram capacity of the negative electrode active material is 345 mAh/g, 347 mAh/g, 349 mAh/g, 351 mAh/g, 353 mAh/g, 355mAh/g, or any value therebetween.

The gram capacity can be measured by any known method in the art, for example, a negative electrode active material sample, a conductive agent carbon black and polyvinylidene fluoride (PVDF) are fully stirred and mixed in an appropriate amount of solvent NMP according to a mass ratio of 91.6:1.8:6.6 to form a uniform negative electrode slurry; the negative electrode slurry is uniformly coated on the surface of the negative electrode current collector copper foil and dried and cold pressed, and then an electrolyte solution is injected with a metal lithium sheet as a counter electrode and a polypropylene (PP) film as a separator, where the adopted electrolyte formulation is as follows: dimethyl carbonate (DMC), ethyl methyl carbonate (EMC) and ethylene carbonate (EC) are mixed according to a weight ratio of 1:1:1 to obtain an organic solvent, and then LiPF₆ is dissolved in the organic solvent to prepare an electrolyte with a concentration of 1.0mol/L. A CR2430 type button cell is assembled in an argon protected glove box. At 25 degrees centigrade (°C), the prepared button cell is first discharged at a constant current of 0.05 Coulomb (C) to 0.005 V, then discharged at a constant current of 10 microampere (µA) to 0.005 V, and left to stand for 5 minutes (min), and the first cycle discharge capacity of the button cell is recorded, and then the button cell is charged at a constant current of 0.1C to 2.0 V, and the charge capacity of the button cell is recorded. The ratio of the charge capacity of the button cell to the mass of the negative electrode active material sample is the gram capacity of the negative electrode active material.

The gram capacity of the negative electrode active material is within an appropriate range, and the particle strength is high, which reduces the possibility that the particles tend to be flat during cold pressing of the electrode sheet, prevents a transmission path of the electrolyte solution from being significantly lengthened, is beneficial to reduce the tortuosity of the negative electrode sheet, facilitates the circulation of the electrolyte solution, and improves the cycle and storage performance of the battery. At the same time, the appropriate gram capacity also enables the battery to have a high energy density.

In some implementations, a volume-distributed particle size Dv50 of the negative electrode active material is denoted as A, and a volume-distributed particle size Dv50 of the negative electrode active material after cold pressing under a pressure of 20,000N is denoted as B, then the negative electrode active material satisfies: B/A≥85%. In some examples, the negative electrode active material satisfies: B/A≥90%.

As used herein, the term "volume-distributed particle size Dv50" refers to the particle size corresponding to the cumulative volume distribution number of particles reaching 50% in a particle size distribution curve.

In the present disclosure, the volume-distributed particle size Dv50 of the negative electrode active material may be measured by a method known in the art, for example, by a laser particle size analyzer with reference to GB/T 19077-2016. The testing instrument may be a Mastersizer Model 3000 laser particle size analyzer from Malvern Instruments Ltd., UK. The Dv50 ratio of the powder before and after cold pressing can be calculated by the ratio of the Dv50 of the powder to the Dv50 measured by powder scraping after cold pressing of the electrode sheet.

In some implementations, B/A is 85%, 86%, 87%, 88%, 89%, 90%, 91%, 92%, 93%, 94%, 95%, 96%, 97%, 98%, 99%, 100%, or a numerical range between any two thereof.

The binding strength of the negative electrode active material particles satisfying the above range is high, which reduces the possibility that the particles tend to be flat during cold pressing of the electrode sheet, prevents the transmission path of the electrolyte from being significantly lengthened during cold pressing, is beneficial to reduce the tortuosity of the negative electrode sheet, facilitates the circulation of the electrolyte solution, and improves the cycle performance and storage performance of the battery.

In some implementations, the volume-distributed particle size Dv50 of the negative electrode active material is 8.0 microns (µm) to 12.0 µm.

In some examples, the volume-distributed particle size Dv50 of the negative electrode active material is 8.0 µm,9.0 µm, 10.0 µm, 11.0 µm, 12.0 µm or any value therebetween.

The volume-distributed particle size Dv50 of the negative electrode active material affects the pore size of the gap between the particles in the negative electrode film layer, thereby affecting the wetting channel of the electrolyte solution for the negative electrode sheet. The volume-distributed particle size Dv50 of the negative electrode active material is within an appropriate range, which is beneficial to the formation of reasonable pore structures between the particles of the negative electrode film layer, and is beneficial to the infiltration of the electrolyte solution into the electrode sheet, thereby improving the cycle performance of the battery, and at the same time, can reduce the negative influence of the excessively large volume-distributed particle size Dv50 of the negative electrode active material on the dynamic performance of the battery, reduce the possibility of lithium precipitation, and improve the cycle performance and storage performance of the battery.

In some implementations, the areal density of the negative electrode film layer is 8 (milligram/centimeter²) mg/cm² to 14 mg/cm². In some examples, the areal density of the negative electrode film layer is 9 mg/cm² to 12 mg/cm² In some examples, the areal density of the negative electrode film layer is 8 mg/m², 9 mg/m², 10 mg/m², 11 mg/m², 12 mg/m², 13 mg/m², 14 mg/m², or a numerical range between any two thereof.

The areal density of the negative electrode film layer may be tested using methods known in the art. As an example, the cold-pressed negative electrode sheet is punched into a small round sheet with an area of S1, and the weight of the small round sheet is denoted as M1. Then, the negative electrode film layer of the negative electrode sheet after weighing is wiped off, the weight of the negative electrode current collector is weighed and denoted as M0, and the areal density of the negative electrode film layer is =(M1-M0)/S1.

The areal density of the negative electrode film layer is within an appropriate range, such that on the one hand, the path of the electrolyte laterally infiltrating the electrode sheet is relatively short, the tortuosity of the electrode sheet is relatively less, and the time required for the electrolyte solution to completely infiltrate the negative electrode sheet is also relatively short, thereby reducing the possibility of local polarization and improving the cycle performance and storage performance of the battery, and on the other hand, the areal density within the appropriate range also ensures that the battery has a certain energy density.

In some implementations, a cohesive force of the negative electrode sheet is 50 Newtons/meter (N/m) to 200 N/m. In some examples, the cohesive force of the negative electrode sheet is 60 N/m to 200 N/m. In some examples, the cohesive force of the negative electrode sheet is 50 N/m, 60 N/m, 70 N/m, 80 N/m, 90 N/m, 100 N/m, 110 N/m, 120 N/m, 130 N/m, 140 N/m, 150 N/m, 160 N/m, 170 N/m, 180 N/m, 190 N/m, 200 N/m, or any value therebetween.

The cohesive force of the negative electrode sheet can be tested by any method and equipment known in the art. For example, after being treated, for example, using a scraper, into a negative electrode sheet with a single-sided coating, the prepared negative electrode sheet is cut into a strip-like sample with a certain length and width (for example, the length may be 200 mm and the width may be 20 mm), then one side of the negative electrode current collector (for example, a copper foil) of the sample is fixed to an aluminum plate with a double-sided adhesive tape, and one side coated with the negative electrode film layer is adhered to a polytetrafluoroethylene (PTE) adhesive tape; after the sample is prepared, a 180°peeling test is performed by using a tensile tester (the peeling surface is consistent with the force line of the tester), the peeling speed is 50 millimeters/minute (mm/min), an acting force curve in the peeling process is obtained after complete peeling, and the ratio of the average value of the acting force in the steady stage to the width of the sample is taken as the cohesive force of the negative electrode sheet. To ensure the accuracy of a test result, each negative electrode sheet sample is tested at least three times, and the average value is taken as the test result. The testing instrument may be an Instron33652 tensile testing machine.

The negative electrode sheet has a high cohesive force, which can reduce the rebound of the electrode sheet, reduce the volume of the electrolyte solution to be supplied in the pores of the negative electrode sheet during cycling, reduce the time required for the electrolyte solution to completely infiltrate the electrode sheet, reduce the possibility of local polarization, improve the infiltration of the electrolyte solution into the electrode sheet, and improve the cycle performance of the battery. At the same time, the higher cohesive force also reduces the influence of powder falling and film peeling of the electrode sheet during cycling on the cycle performance and safety performance of the battery.

In some implementations, a rebound rate of the negative electrode sheet is 8% to 23%. In some examples, the rebound rate of the negative electrode sheet is 10% to 21%. In some examples, the rebound rate of the negative electrode sheet is 8%, 10%, 12%, 14%, 16%, 18%, 20%, 22%, 23%, or any value therebetween.

In the present disclosure, the term "rebound rate of the negative electrode sheet" refers to the change rate of the thickness of the negative electrode sheet in an empty state (the state of charge SOC is 0%) and a full state (the state of charge SOC is 100%).

The rebound rate of the negative electrode sheet can be tested by any method in the art, and the example is as follows: the thickness of the cold-pressed negative electrode sheet provided in the example and the comparative example of the disclosure is denoted as H0. The secondary batteries provided in the examples and comparative examples of the present disclosure are taken and subjected to a charge and discharge test in an environment of 25°C, and discharged at a constant current of 1.0C (i.e., the current value at which the theoretical capacity is completely discharged in 1h) to 2.5 V. Then, the battery is charged to 3.65 V at a constant current of 1.0C, and continued to be charged at a constant voltage until the current reaches 0.05C, and after the fully charged battery cell is allowed to stand for 5 min, the battery is discharged to 2.5 V at a constant current of 1.0C, and the discharge capacity at this time is denoted as C0. The secondary battery is charged to 3.65 V at 25°C, and the secondary battery is disassembled and the thickness of the negative electrode sheet at this time is tested and denoted as H1. The rebound rate of the negative electrode sheet is (H1/H0-1)×100%.

The rebound rate of the negative electrode sheet is related to the gram capacity of the negative electrode active material and the cohesive force of the electrode sheet.

The rebound rate of the negative electrode sheet affects the volume change rate of the pores in the negative electrode film layer during cycling of the battery, that is, the volume of the electrolyte to be supplied in the pores. The greater the rebound rate of the negative electrode sheet is, the more the electrolyte solution needs to be removed in the fully charged state of the battery, the longer the time for the electrolyte solution to re-infiltrate the negative electrode sheet is, the electrolyte solution may not be able to completely infiltrate the negative electrode sheet during cycling, which affects the cycle performance of the battery, and at the same time, the greater rebound rate of the negative electrode sheet causes the larger the stress of the negative electrode sheet during charging and discharging, the larger the degree of damage of the solid electrolyte interphase (SEI) film of the negative electrode sheet is, the more active lithium needs to be consumed for repair during cycling, which also affects the cycle performance and storage performance of the battery. If the rebound rate of the negative electrode sheet is too less, the gram capacity of the negative electrode active material needs to be adjusted to an excessively small range or the cohesive force of the negative electrode sheet needs to be adjusted to an excessively large range, which is not conducive to improving the energy density of the battery.

In some implementations, the negative electrode active material includes a graphite material.

A second aspect of the present disclosure provides a method for preparing a negative electrode active material, including providing a raw material; processing the raw material to obtain an intermediate product; and performing a graphitization treatment on the intermediate product to obtain a negative electrode active material, where a particle body of the negative electrode active material includes an inner region and a surface layer region at least partially surrounding the inner region, the surface layer region means a region formed by extending a distance of 30 nm from a surface of the particle body of the negative electrode active material to an interior of the particles, and the surface layer region includes a disordered layer.

Herein, the term "graphitization treatment" refers to a high-temperature heat treatment process of a carbon material. Under the action of high temperature, the carbon material undergoes a process of transforming from a twodimensional structure of a carbon network to a three-dimensional ordered structure through "microcrystalline" growth.

In some implementations, the maximum power of the graphitization treatment is 70% to 90% of the rated power of a graphitization treatment device.

In some examples, the maximum power of the graphitization treatment is 70%, 75%, 80%, 85%, 90% of the graphitization treatment device or a numerical range between any two thereof. It may be understood that the graphitization treatment device refers to any device capable of performing graphitization treatment, including, but not limited to an Acheson furnace, a box furnace, an internal string furnace, a continuous graphitization device, an electric calcining furnace, a medium frequency furnace, a tube furnace or the like. The rated power of the graphitization treatment devices produced by different manufacturers may be different, and may be selected according to actual conditions. The maximum power of the graphitization treatment used in the present disclosure needs to be lower than the rated power of the graphitization treatment device to achieve the uniformity of a heat field during the graphitization treatment.

In some implementations, the graphitization treatment device is an internal string furnace, and the rated power of the internal string furnace is 25,000 watts (W) to 32,000 W.

In some implementations, the graphitization treatment device is an Acheson furnace, and the rated power of the Acheson furnace is 28,000 W to 30,000 W.

In some implementations, time for the graphitization treatment is 10 h to 50 h.

In some implementations, time of the graphitization treatment at the maximum power is 10 h, 13 h, 16 h, 19 h, 22 h, 25 h, 28 h, 31 h, 33 h, 36 h, 39 h, 42 h, 45 h, 48 h, 50 h, or a numerical range between any two thereof.

In some implementations, the graphitization treatment device is an internal furnace, and time of the graphitization treatment at the maximum power is 10 h to 30 h.

In some implementations, the graphitization treatment device is an Acheson furnace, and time of the graphitization treatment at the maximum power is 30 h to 50 h.

In some implementations, a temperature for the graphitization treatment is 2,600°C to 3,000°C.

In some implementations, a temperature for the graphitization treatment is 2,600°C, 2,700°C, 2,800°C, 2,900°C, 3,000°C, or a numerical range between any two thereof.

The appropriate graphitization treatment temperature and the appropriate graphitization treatment time are not only difficult to cause excessive rearrangement of the precursor to result in a high specific surface area of the graphite negative electrode active material after the graphitization treatment and the influence of high-temperature performance, and but also effectively increase the graphitization degree of the graphite negative electrode active material, thereby facilitating the simultaneous improvement of high-temperature storage and cycle life of the secondary battery.

In some implementations, the raw material includes at least one of petroleum coke, needle coke, and pitch coke. In some examples, the raw material is needle coke.

As used herein, the term "petroleum coke" refers to coke formed by carbonization of a petroleum residue or petroleum pitch at a high temperature.

As used herein, the term "needle coke" refers to coal tar pitch or petroleum pitch, which can be carbonized in a liquid phase to form an anisotropic intermediate phase, and then carbonized at a high temperature to form needle-like textured coke.

As used herein, the term "pitch coke" refers to a solid material formed by carbonizing coal tar pitch at a high temperature.

The needle coke has a series of advantages such as a low thermal expansion coefficient, a low porosity, low sulfur, low ash, a low metal content, a high conductivity, and easy graphitization. The graphite negative electrode active material after the graphitization treatment can achieve a high ultimate compaction density and has a low cycle expansion rate.

In some implementations, based on the total volume of the raw material structure, the volume proportion of the fibrous structure in the raw material is greater than or equal to 55%. In some examples, based on the total volume of the raw material structure, the volume proportion of the fibrous structure in the raw material is 58% to 70%.

Herein, the "fibrous structure" is also called a streamline structure, and refers to a structure with an obvious fibrous texture observed by the raw material under a microscope.

Generally, microstructures of raw materials can be divided into a mosaic type, a domain type, and a fibrous type according to morphological characteristics and isochromatic region size of the raw materials under a polarizing microscope. In general, an isochromatic region microstructure having a size of less than 30 µm is determined as the mosaic type, an isochromatic region microstructure having a size of more than 30 µm is determined as the domain type, and an anisotropic banded isochromatic region is determined as a fibrous structure.

In the present disclosure, the volume proportion of the fiber structure in the raw material can be tested by a method known in the art, for example, according to GB 1997-89, the raw material crushed to 1 mm is mixed uniformly, 40 g to 50 g of the raw material is taken out by retraction score, 4 g to 5 g of a 0.07 mm to 1.0 mm grade sample is taken by a square hole sieve for tableting, according to MT 116.1-86, powdered coke and block coke sheets are prepared, the diameters of the powdered coke sheets should not be less than 22 mm, and the volume occupied by the cement should be less than 1/3; the sample is placed on slide glass with mastic, flattened and placed on an objective table to focus, and after a microscope is corrected, a polarizer and analyzer are adjusted to be orthogonal. A marble test plate (1λ) is inserted to make a visual field present a first order red interference color; and the step length of a moving ruler is determined to ensure that more than 400 effective measuring points are evenly distributed, where the point distance is preferably 0.3 mm to 0.5 mm, and the line distance is preferably 0.5 mm to 0.8 mm. Starting from one end of the sample, the microstructure category under the intersection of the cross filaments is determined, and the number of the effective measurement points of the optical structure of the fibrous structure divided by the total number of statistical test points is used as the volume proportion of the fibrous structure in the raw material.

In some examples, based on the total volume of the raw material structure, the volume proportion of the fibrous structure in the raw material is 55%, 58%, 60%, 65%, 70%, or a numerical range between any two thereof.

The raw material with many fibrous structures is beneficial to improve the compaction density and gram capacity of the graphite negative electrode active material, such that the graphite negative electrode active material retains high integrity during compacting, and the battery has a high cycle life while having a good energy density, but the excessive proportion of the fibrous structures will increase the cost and expansion rate of the graphite negative electrode active material, and affect the dynamic performance. The volume proportion of the raw material of the fibrous structure within the above range not only has a lower cost, but also enables the graphite to have a good gram capacity, and the battery cell has a kinetic window of a full life cycle, thereby comprehensively improving the long-term cycle life and electrochemical performance of the battery.

In some implementations, the raw material is capable of achieving a maximum gram capacity greater than the gram capacity of the graphite negative electrode active material.

By using a high-grade raw material and controlling the degree of graphitization, the maximum gram capacity that can be achieved by the raw material will not be fully utilized, and a graphite negative electrode active material including a disordered layer in the surface layer region is obtained, thereby achieving both the cycle life and the dynamic performance of the battery.

In some implementations, the processing the raw material specifically includes crushing, shaping, and classifying the raw material to obtain a first precursor; granulating the first precursor to obtain a second precursor; and carbonizing a mixture of the first precursor and the second precursor at a low temperature to obtain the intermediate product.

Crushing is a process of reducing the particle size of the raw material, and the raw material may be crushed by any mechanical device such as a crusher or a mechanical mill.

The shaping is a process of adjusting the curvature and particle size of the raw material.

The classifying is a process of adjusting the particle size distribution of the raw material to obtain the first precursor meeting the particle size requirement. The particle size and particle size distribution of the first precursor may be adjusted by adjusting the classifying frequency and the air inlet volume.

It may be understood that the low-temperature carbonization of the first precursor and the second precursor to obtain the intermediate product includes both low-temperature carbonization of the mixture of the first precursor and the second precursor to obtain the intermediate product, and low-temperature carbonization of the first precursor and the second precursor respectively to obtain the first intermediate product and the second intermediate product respectively.

In some implementations, the Dv50 particle size of the first precursor is from 6.0 µm to 10.0 µm.

In some implementations, the Dv50 particle size of the first precursor is 6.0 µm, 7.0 µm, 8.0 µm, 9.0 µm, 10.0 µm, or a numerical range between any two thereof.

In some implementations, the particle size distribution (Dv90 to Dv10)/Dv50 of the first precursor is 1.05 to 1.75.

In some implementations, the particle size distribution (Dv90 to Dv10)/Dv50 of the first precursor is 1.05, 1.15, 1.25, 1.35, 1.45, 1.55, 1.65, 1.75, or a numerical range between any two thereof.

In some implementations, a tap density of the first precursor is 0.5 g/cm³ to 0.7 g/cm³.

Herein, the term "tap density" refers to a mass per unit volume of the powder tapped under specified conditions in a container.

In the present disclosure, the tap density of the first precursor may be tested by a method known in the art, and as an example, it may be measured using a powder tap density tester with reference to GB/T 5162-2006. The testing instrument may be a Dandong Baite BT 301, and the testing parameters are vibration frequency of 250±15 times/min, amplitude of 3±0.2 mm, vibration times of 5,000 times, and a measuring cylinder of 25 mL.

In some implementations, the tap density of the first precursor is 0.5 g/cm³, 0.55 g/cm³, 0.6 g/cm³, 0.65g/cm ³, 0.7 g/cm³, or any numerical range between any two thereof.

In some implementations, the Dv50 particle size of the second precursor is from 11.0 µm to 15.0 µm.

In some implementations, the Dv50 particle size of the second precursor is 11.0 µm, 12.0 µm, 13.0 µm, 14.0 µm, 15.0 µm, or a numerical range between any two thereof.

The second precursor is obtained by granulating the first precursor, and thus, the second precursor mainly forms the secondary particles in the graphite negative electrode active material.

Controlling the particle size of the first precursor and the second precursor helps to regulate the particle size and particle size distribution of the graphite negative electrode active material, and improve the cycle stability of the battery.

In some implementations, the crushing, shaping, and classifying the raw material to obtain the first precursor includes crushing, shaping, and classifying the raw material to obtain a secondary raw material, and removing fine powder in the secondary raw material that accounts for 10% to 35% of the total mass of the secondary raw material to obtain the first precursor, where the Dv50 of the fine powder is 3 µm to 7 µm and the Dv99 thereof is less than or equal to 30 µm, and the particle size distribution (Dv90 to Dv10)/Dv50 of the fine powder is greater than 1.6.

In some implementations, the temperature of the low-temperature carbonization is 900°C to 1300 °C, and the time for the low-temperature carbonization is 24 h to 240 h.

In some implementations, the temperature for the low-temperature carbonization is 900°C, 1,000 °C, 1,100°C, 1,200°C, 1,300°C, or a numerical range between any two thereof.

In some examples, the time for the low-temperature carbonization is 24 h, 50 h, 75 h, 100 h, 150 h, 200 h, 240 h, or a numerical range between any two thereof.

In some implementations, the first intermediate product is subjected to graphitization treatment to obtain primary particles.

In some implementations, the second intermediate product is subjected to graphitization treatment to obtain secondary particles.

In some implementations, the primary particles and the secondary particles are mixed at a mass ratio of 3:7 to 7:3 to obtain the negative electrode active material.

In some implementations, the first intermediate product and the second intermediate product are mixed in a mass ratio of 3:7 to 7:3 to obtain an intermediate product, and the intermediate product is subjected to graphitization treatment to obtain the negative electrode active material.

In some implementations, the negative electrode current collector has two surfaces opposite in its own thickness direction, and the negative electrode film layer is arranged on either one or both of the two opposite surfaces of the negative electrode current collector.

In some implementations, the negative electrode current collector may use a metal foil or a composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some examples, the negative electrode film layer may also be one or more of conventional natural graphite, artificial graphite, soft carbon, hard carbon, a silicon-based material, a tin-based material, and lithium titanate. The silicon-based material may include one or more of elemental silicon, silicon oxide, a silicon-carbon composite, a silicon-nitrogen composite, and a silicon alloy material. The tin-based material may include one or more of elemental tin, a tin oxide compound, or a tin alloy material.

In some examples, the negative electrode film layer further includes a binder. In some examples, the binder is at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some examples, the negative electrode film layer further includes a conductive agent. In some examples, the conductive agent is at least one of superconducting carbon, acetylene black, carbon black, ketjen black, a carbon dot, a carbon nanotube, graphene, and a carbon nanofiber.

In some examples, the negative electrode film layer further includes another auxiliary agent, for example, a thickening agent (such as sodium carboxymethyl cellulose (CMC)).

In some implementations, the negative electrode sheet may be prepared in the following manner: dispersing the above-mentioned components for preparing the negative electrode sheet, for example, the negative electrode active material, the conductive agent, the binder, and any other component in a solvent (e.g., deionized water) to form a negative electrode slurry; and coating the negative electrode slurry on the negative electrode current collector, and performing procedures such as drying and cold pressing, to obtain the negative electrode sheet.

In an implementation of the present disclosure, a secondary battery is provided.

Generally, the secondary battery includes a positive electrode sheet, a negative electrode sheet, an electrolyte, and a separator. During charge and discharge of the battery, active ions are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being short-circuited and allow ions to pass through.

### [Positive electrode sheet]

The positive electrode sheet includes a positive electrode current collector and a positive electrode film layer arranged on at least one surface of the positive electrode current collector, the positive electrode film layer including a positive electrode active material in the first aspect of the present disclosure.

As an example, the positive pole current collector has two surfaces opposed in its own thickness direction, and the positive pole film layer is provided on either one or both of the two opposed surfaces of the positive pole current collector.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some implementations, the positive electrode active material may be a positive electrode active material for a battery known in the art. As an example, the positive pole active material may include at least one of olivine-structured lithium-containing phosphate, lithium-transition metal oxide, and their respective modifying compounds. However, the present disclosure is not limited to these materials, and another conventional material that can be used as a positive electrode active material of a battery may also be used. These positive pole active materials may be used alone or in combination of two or more thereof. Examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.85}Co_{0.15}Al_{0.05}O₂), modifying compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon.

In some examples, the positive electrode film layer further includes a binder. As an example, the binder may include at least one of polyvinylidene fluoride (PVDF), polytetrafluoroethylene (PTFE), vinylidene fluoridetetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some examples, the positive electrode film layer further includes a conductive agent. As an example, the conductive agent may include at least one of superconducting carbon, acetylene black, carbon black, ketjen black, carbon dots, carbon nanotubes, graphene, and carbon nanofibers.

In some implementations, the positive electrode sheet may be prepared by dispersing the above components for preparing a positive electrode sheet, for example, a positive electrode active material, a conductive agent, a binder, and any other components in a solvent (for example, N-methylpyrrolidone) to form a positive electrode slurry, and applying the positive electrode slurry to a positive electrode current collector, followed by drying, cold pressing, and the like.

### [Electrolyte]

The electrolyte functions to conduct ions between the positive electrode sheet and the negative electrode sheet. The type of the electrolyte is not particularly limited in the present disclosure, and may be selected according to a requirement. For example, the electrolyte may be liquid, gelled or all solid.

In some implementations, the electrolyte uses an electrolyte solution. The electrolyte solution includes an electrolyte salt and a solvent.

In some examples, the electrolyte salt includes at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some examples, the solvent is at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some examples, the electrolyte solution further includes an additive. For example, the additive may include a negative pole film-forming additive or a positive pole film-forming additive, and may further include an additive capable of improving specific performance of a battery, for example, an additive for improving overcharge performance of a battery, or an additive for improving high-temperature or low-temperature performance of a battery.

### [Separator]

In some implementations, the secondary battery further includes a separator. The type of the separator is not particularly limited in the present disclosure, and any well-known porous separator with good chemical stability and mechanical stability may be used.

In one example, a material of the separator may be at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some implementations, the positive electrode sheet, the negative electrode sheet, and the separator may be manufactured into the electrode assembly through a winding process or a lamination process.

In some implementations, the secondary battery may include an outer package. The outer package may be used to package the foregoing electrode assembly and electrolyte.

In some implementations, the outer package of the secondary battery may be a hard case, such as a hard plastic case, an aluminum case, a steel case, or the like. The outer package of the secondary battery may also be a pouch, such as a bag-type pouch. The material of the pouch may be plastic, and examples of the plastic include polypropylene, polybutylene terephthalate, and polybutylene succinate.

The shape of the secondary battery is not limited in the present disclosure, and may be a cylindrical shape, a square shape, or any other shape. For example, FIG. 2 shows a secondary battery 5 of a square structure as an example.

In some implementations, referring to FIG. 3, the outer package may include a housing 51 and a cover plate 53. The housing 51 may include a bottom plate and side plates connected to the bottom plate, and the bottom plate and the side plates define an accommodating chamber. The housing 51 has an opening communicating with the accommodating chamber, and the cover plate 53 can cover the opening to close the accommodating chamber. The positive electrode sheet, the negative electrode sheet, and the separator may be formed into an electrode assembly 52 through a winding process or a lamination process. The electrode assembly 52 is packaged within the accommodating chamber. The electrolyte solution is impregnated into the electrode assembly 52. There may be one or a plurality of electrode assemblies 52 included in the secondary battery 5, and the number may be selected by those skilled in the art according to specific practical requirements.

In some implementations, the secondary batteries may be assembled into a battery module, and there may be one or a plurality of secondary batteries included in the battery module, and the specific number may be selected by those skilled in the art according to the application and capacity of the battery module.

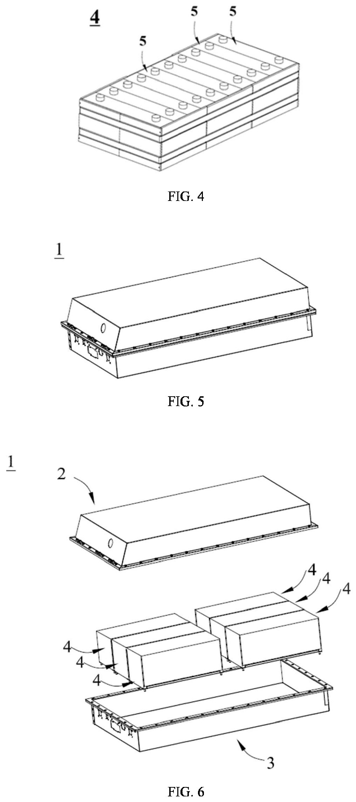

FIG. 4 shows a battery module 4 as an example. Referring to FIG. 4, in the battery module 4, a plurality of secondary batteries 5 may be arranged in series in the longitudinal direction of the battery module 4. Certainly, the battery cells may alternatively be arranged in any other manner. Further, the plurality of secondary batteries 5 may be fixed by fasteners.

In some examples, the battery module 4 may further include a housing with an accommodating space. The plurality of secondary batteries 5 are accommodated in the accommodating space.

In some implementations, the battery modules may be further assembled into a battery pack, and there may be one or a plurality of battery modules included in the battery pack, and the specific number may be selected by those skilled in the art according to the application and capacity of the battery pack.

FIG. 5 and FIG. 6 show a battery pack 1 as an example. Referring to FIG. 4 and FIG. 5, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery case.

In addition, the present disclosure further provides an electric apparatus including at least one of the secondary battery, the battery module, or the battery pack provided by the present disclosure. The secondary battery, the battery module, or the battery pack may be used as a power source of the electric device and may also be used as an energy storage unit of the electric device. The electric device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

The secondary battery, the battery module, or the battery pack may be selected according to use requirements of the electric device.

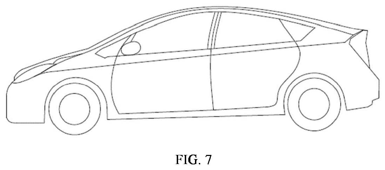

FIG. 7 shows an electric apparatus as an example. The electrical device is a pure electric vehicle, a hybrid electric vehicle, a plug-in hybrid electric vehicle, or the like. In order to meet the demand for high power and high energy density of the secondary battery by the electrical device, a battery pack or a battery module may be used.

In another example, the device may be a cell phone, a tablet computer, a notebook computer, or the like. This electrical device is generally required to be thin and lightweight, and may use a secondary battery as a power supply.

### Examples

Examples of the present disclosure are described below. The examples described below are illustrative, and are only used to explain the present disclosure, rather than being construed as limiting the present disclosure. In the examples, specific techniques or conditions are not indicated, and they are performed according to techniques or conditions described in documents in the art or according to the specification of the product. The reagents or instruments used without specifying the manufacturer(s) are conventional products that are commercially available.

The following examples describe the disclosure of the present disclosure more specifically. These examples are used only for illustration, since various modifications and changes made within the scope of the disclosure of the present application are obvious to those skilled in the art. Unless otherwise stated, all parts, percentages, and ratios reported in the following examples are based on a weight. All reagents used in the examples are commercially available or can be synthesized according to conventional methods, and can be used directly without further treatment. All instruments used in the examples are commercially available.

### I. Preparation Method

### Preparation of negative electrode active materials H1 to H6

H1: needle coke having a fiber structure volume proportion of 61.1% was coarsely crushed, then the coarsely crushed material was crushed and sieved, the sieved material was shaped and classified, a certain amount of fine powder was removed during classifying to obtain a first precursor, where 21% of the fine powder relative to the total mass of the sieved material was removed, and the fine powder referred to particles having a Dv50 particle size of 3 µm to 7 µm and a particle size distribution (Dv90 to Dv10)/Dv50>1.6. Here, the Dv50 particle size of the first precursor is 9.0 µm, the particle size distribution (Dv90 to Dv10)/Dv50 is 1.35, and the tap density of the first precursor is 0.65 g/cm³.

The first precursor was granulated and shaped in a reactor to obtain a second precursor having a particle size Dv50 of 14.3 µm;

the first precursor and the second precursor were respectively placed in a furnace for carbonization, where the carbonization temperature was 1,100°C, and the time of the high temperature zone was 24 h, to obtain a first intermediate product and a second intermediate product, the tap density of the first intermediate product was 0.98 g/cm³, and the tap density of the second intermediate product was 0.91 g/cm³.

The first intermediate product and the second intermediate product were subjected to graphitization treatment at a temperature of 2,800°C, respectively, the graphitization treatment device was an internal series furnace, the rated power of the graphitization treatment device was 28,000 W, the maximum power of the graphitization treatment was 22,400 W, the maximum power/the rated power×100%=80%, the constant power duration of the maximum power was maintained for 20 h, and primary particles and secondary particles were obtained, respectively.

The primary particles and the secondary particles were uniformly mixed according to a mass ratio of 30%: 70%, and sieved to obtain a final negative electrode active material H1.

The preparation processes of the negative electrode active materials H2 to H6 are basically the same as that of the negative electrode active material H1, and the adjusted parameters are shown in Table 1.

**Table 1**

| | Preparation process | | |
|---|---|---|---|
| No. | Maximum power/rated power | Constant power time at maximum power in graphitization treatment | Mixing mass ratio of primary particles and secondary particles |
| H1 | 80% | 20 h | 30%:70% |
| H2 | 80% | 20 h | 50%:50% |
| H3 | 80% | 20 h | 60%:40% |
| H4 | 80% | 20 h | 70%:30% |
| H5 | 100% | 50 h | 10%:90% |
| H6 | 100% | 50 h | 90%:10% |

### Example 1

### 1) Preparation of a negative electrode sheet

The prepared negative electrode active material H1, a conductive agent carbon black Super P, a thickening agent sodium carboxymethyl cellulose, and a binder styrene-butadiene rubber were mixed at a mass ratio of 96:1:1.2:1.8, then deionized water was added as a solvent, and the mixture was stirred under the action of a vacuum stirrer until the system was homogeneous to obtain a negative electrode slurry; and the negative electrode slurry was uniformly applied to a negative electrode current collector copper foil, and the negative electrode current collector copper foil was dried, cold-pressed, and slit to obtain a negative electrode sheet. The compaction density of the negative electrode film layer is 1.55 g/cm³, and the areal density thereof is 9.2 mg/cm².

### 2) Preparation of a positive electrode sheet

A positive electrode active material lithium iron phosphate (LFP), a conductive agent carbon black, and a binder polyvinylidene fluoride were mixed at a mass ratio of 97:1:2, and a solvent N-methylpyrrolidone was added into the mixture, and the mixture was stirred till the system is homogeneous to obtain a positive electrode slurry; and the positive electrode slurry was uniformly applied on a positive electrode current collector aluminum foil, and the positive electrode current collector aluminum foil was dried, cold-pressed, and slit to obtain a positive electrode sheet. For example, the compaction density of the negative electrode film layer is 2.50 g/cm³, and the areal density thereof is 19.7 g/cm².

### 3) Preparation of an electrolyte solution

In an argon atmosphere glove box with a water content < 10 ppm, ethylene carbonate (DEC), ethyl methyl carbonate (EMC), and diethyl carbonate (EC) were mixed at a weight ratio of 1: 1: 1 to obtain an organic solvent, LiPF₆ was dissolved in the organic solvent to prepare an electrolyte solution with a concentration of 1.0 mol/L, and then vinylene carbonate (VC) was added, where the content of VC was 2% of the total mass of the electrolyte solution.

### 4) Separator

A polyethylene film is used as a separator.

### 5) Preparation of a secondary battery

The positive electrode sheet, the separator, and the negative electrode sheet described above were stacked in order such that the separator was located between the positive electrode sheet and the negative electrode sheet to provide a separation function, and then the three items were wound to obtain an electrode assembly; and the electrode assembly was placed into an outer package, dried, then injected with an electrolyte solution, and subject to procedures such as vacuum sealing, resting, formation, and shaping to obtain an example lithium-ion battery.

### Examples 2-8 and Comparative Examples 1-3

The preparation method of the secondary battery is similar to that of Example 1, except that different negative electrode active materials were used, and the areal density or compaction density of the negative electrode film layer was adjusted, as shown in Table 2.

### II. Performance Test

### 1. Test for cycle performance of the secondary battery at 60°C

At 60°C, the batteries in Examples and Comparative Examples were charged with a constant current at 1C to a voltage of 3.65 V, then charged with a constant voltage of 3.65 V to a current at ≤0.05C, and then discharged with a constant current at 1C to a voltage of 2.5 V. This was one charge-discharge cycle. The discharge capacity of the initial cycle was recorded as C1. The charging and discharging cycle was repeated until the battery capacity was reduced to 80% of the initial capacity C1, the test was stopped, and the number of cycles was recorded.

### 2. Test for room-temperature cycle performance of the secondary battery

At 25°C, the secondary batteries were subjected to a charge-discharge test: the batteries were charged with a constant current at 1C to a voltage of 3.65 V, then charged with a constant voltage of 3.65 V to a current≦0.05 C, and then discharged with a constant current at 1C to a voltage of 2.5 V. This was one charge-discharge cycle. The discharge capacity of the initial cycle, i.e., the initial discharge capacity, was recorded as C0. Then, the battery cell was fully charged and placed in an environment of 60°C for different times, and taken out every 30 days to test the remaining capacity C1 at 25°C, which was a storage cycle, and the discharge capacity of this time was the discharge capacity after the first storage. Subsequently, the first storage test procedure was repeated, the discharge capacity value during storage was recorded, and the cycle capacity retention rate for 120 days was recorded.

### III Results

**Table 2**

| | Negative electrode active material | | Negative electrode film layer | | | Secondary battery | |
|---|---|---|---|---|---|---|---|
| No. | Type | Liquid absorption rate (ml/100g) | Compaction density (g/cm³) | Areal density (mg/cm ²⁾ | Tortuosity | Number of cycles | Storage performance |
| Example 1 | H1 | 33 | 1.55 | 9.2 | 3.4 | 1926 | 90.2% |
| Example 2 | H2 | 43 | 1.55 | 9.2 | 3.2 | 2039 | 90.7% |
| Example 3 | H3 | 49 | 1.55 | 9.2 | 3.3 | 2044 | 91.2% |
| Example 4 | H4 | 57 | 1.55 | 9.2 | 3.4 | 1949 | 90.9% |
| Example 5 | H2 | 43 | 1.45 | 9.2 | 4.1 | 1958 | 91.5% |
| Example 6 | H2 | 43 | 1.60 | 9.2 | 2.8 | 1906 | 90.1% |
| Example 7 | H2 | 43 | 1.45 | 11.5 | 5.0 | 1887 | 91.8% |
| Example 8 | H2 | 43 | 1.60 | 11.5 | 3.1 | 1856 | 90.1% |
| Comparative Example 1 | H5 | 15 | 1.55 | 9.2 | 3.5 | 1732 | 88.6% |
| Comparative Example 2 | H6 | 65 | 1.55 | 9.2 | 3.8 | 1784 | 89.5% |
| Comparative Example 3 | H1 | 33 | 1.60 | 11.5 | 6.2 | 1826 | 88.1% |

It may be seen from the comparison of Examples 1-8 with Comparative Examples 1-3 that the examples of the present disclosure simultaneously satisfy that the compaction density of the negative electrode film layer is greater than or equal to 1.45 g/cm³, the liquid absorption rate of the negative electrode active materials H1-H4 is 30 ml/100g to 60 ml/100g, and the tortuosity of the negative electrode sheet is less than or equal to 6, and the secondary battery can have a higher energy density while having better cycle performance and storage performance.

It should be noted that the present disclosure is not limited to the aforementioned implementations. The aforementioned implementations are merely examples, and any implementation having substantially the same configuration as the technical concept and exhibiting the same operation and effect within the scope of the claims of the present disclosure is included in the technical scope of the present disclosure. In addition, various modifications that can be conceived by those skilled in the art may be made to the implementations without departing from the subject matter of the present disclosure, and other implementations constructed by combining some of the constituent elements in the implementations are also included in the scope of the present disclosure.

## Claims

1. A secondary battery, comprising a negative electrode sheet, wherein the negative electrode sheet comprises a negative electrode current collector and a negative electrode film layer arranged on at least one surface of the negative electrode current collector, the negative electrode film layer comprises a negative electrode active material, and a compaction density of the negative electrode film layer is greater than or equal to 1.45 g/cm³, a liquid absorption rate of the negative electrode active material is 30 ml/100 g to 60 ml/100 g, and a tortuosity of the negative electrode sheet is less than or equal to 6.

2. The secondary battery according to claim 1, wherein the compaction density of the negative electrode film layer is 1.5 g/cm³ to 1.6 g/cm³.

3. The secondary battery according to claim 1 or 2, wherein the liquid absorption rate of the negative electrode active material is 35 ml/100 g to 50 ml/100 g.

4. The secondary battery according to any one of claims 1 to 3, wherein the tortuosity of the negative electrode sheet is 2 to 5.

5. The secondary battery according to claim 1, wherein the negative electrode active material comprises both primary particles and secondary particles, and optionally, based on a total number of the primary particles and the secondary particles in the negative electrode active material, and a proportion by number of the secondary particles is 25% to 75%, optionally 26% to 50%.

6. The secondary battery according to any one of claims 1 to 5, wherein a particle body of the negative electrode active material comprises an inner region and a surface layer region at least partially surrounding the inner region, the surface layer region means to a region formed by extending a distance of 30 nm from a surface of the particle body of the negative electrode active material to an interior of the particles, and the surface layer region comprises a disordered layer, and optionally, a thickness of the disordered layer is 1 nm to 20 nm.

7. The secondary battery according to any one of claims 1 to 6, wherein a specific surface area of the negative electrode active material is 1.1 m²/g to 1.9 m²/g, optionally, 1.2 m²/g to 1.8 m²/g.

8. The secondary battery according to any one of claims 1 to 7, wherein a particle size distribution (Dv90 to Dv10)/Dv50 of the negative electrode active material is 1.1 to 1.6, optionally 1.15 to 1.55.

9. The secondary battery according to any one of claims 1 to 8, wherein a gram capacity of the negative electrode active material is 345 mAh/g to 355 mAh/g, optionally 347 mAh/g to 353 mAh/g.

10. The secondary battery according to any one of claims 1 to 9, wherein a volume-distributed particle size Dv50 of the negative electrode active material is denoted as A, and a volume-distributed particle size Dv50 of the negative electrode active material after cold pressing under a pressure of 20,000N is denoted as B, then the negative electrode active material satisfies: B/A≥85%, optionally 290%.

11. The secondary battery according to any one of claims 1 to 10, wherein the volume-distributed particle size Dv50 of the negative electrode active material is 8 µm to 12.0 µm.

12. The secondary battery according to any one of claims 1 to 11, wherein an areal density of the negative electrode film layer is 8 mg/cm² to 14 mg/cm², optionally, 9 mg/cm² to 12 mg/cm².

13. The secondary battery according to any one of claims 1 to 12, wherein a cohesive force of the negative electrode sheet is 50 N/m to 200 N/m, optionally, 60 N/m to 150 N/m.

14. The secondary battery according to any one of claims 1 to 13, wherein a rebound rate of the negative electrode sheet is 8% to 23%, optionally, 10% to 21%.

15. An electric apparatus, comprising the secondary battery according to any one of claims 1 to 14.
